# EUROPEAN PATENT SPECIFICATION

(11) **EP 1 998 935 B1**
(45) Date of publication and mention of the grant of the patent: **16.07.2014**
(21) Application number: 07716093.5
(22) Date of filing: 29.03.2007
(51) Int. Cl.: B25B 23/00, B23F 19/06

(54) **MOUNTING DEVICE FOR ATTACHING AN ELEMENT TO A TUBULAR MEMBER**
BEFESTIGUNGSVORRICHTUNG ZUM BEFESTIGEN EINES ELEMENTS AN EINEM RÖHRENFÖRMIGEN GLIED
DISPOSITIF DE MONTAGE POUR FIXATION D'UNE PIECE A UN ELEMENT TUBULAIRE

(30) Priority: 30.03.2006 SE 0600714
(43) Date of publication of application: 10.12.2008
(73) Proprietor: Atlas Copco Industrial Technique AB, 105 23 Stockholm (SE)
(72) Inventor: HANSSON, Gunnar Christer, S-114 59 Stockholm (SE)
(86) International application number: PCT/SE2007/000301
(87) International publication number: WO 2007/114761

(56) References cited:
- WO-A1-01/70465
- DE-A1- 3 301 543
- US-A- 4 765 210
- US-A1- 2005 178 935

## Description

The invention relates to mounting device for attaching an element with a spherical connection portion to a tubular member known for example from US 2005/0,178,935 and in particular a tubular member forming a part of a mounting structure for mechanical support of one or more nut runner spindles. The invention is particularly concerned with a device for connecting an element having a spherical connection portion to a tubular member.

A device of the above type has previously been described in WO 2006/038856. A problem concerned with this previously described mounting device is that it is not connectable to a tubular member at any time. Since the support member of this device has a more than 180 degrees encircling opening for the tubular member the device may not be attached to the tubular member other than being slipped onto the tubular member from one of its ends. This means a serious and undesirable limitation of the flexibility of the entire structure, because additional equipment can be attached to a tubular member only before the tubular member has been connected to other structure elements. In many cases it is important to be able to attach supplemental equipment or accessories to the tubular member at any time after the entire structure has been assembled which has not been possible by using the previously described device.

It is the main object to solve the above described problem by providing a mounting device for attaching elements with spherical connection portions to a tubular member, and by which such elements are attachable to a tubular member at any time, independently of other elements being attached to the tubular member.

Further objects and advantages of the invention will appear from the following specification and claims.

A preferred embodiment of the invention is described below with reference to the accompanying drawing.

In the drawing
Fig. 1 shows a perspective view of a tool carrying structure containing mounting devices according to the invention

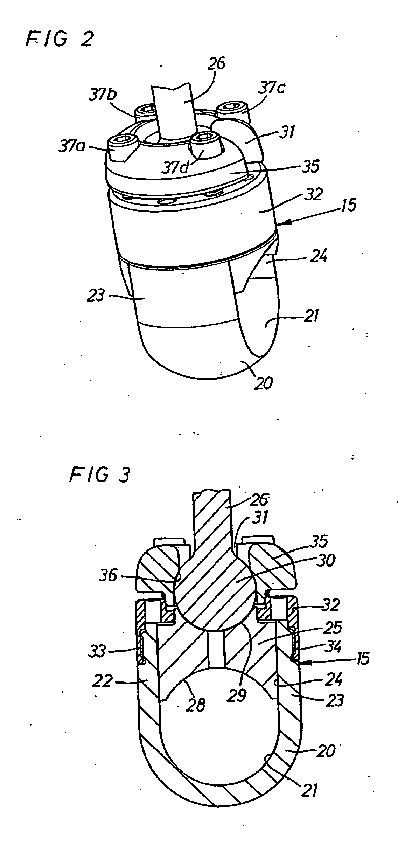

Fig. 2 shows a perspective view of a mounting device according to the invention.
Fig. 3 shows a longitudinal section through the device in Fig. 2.

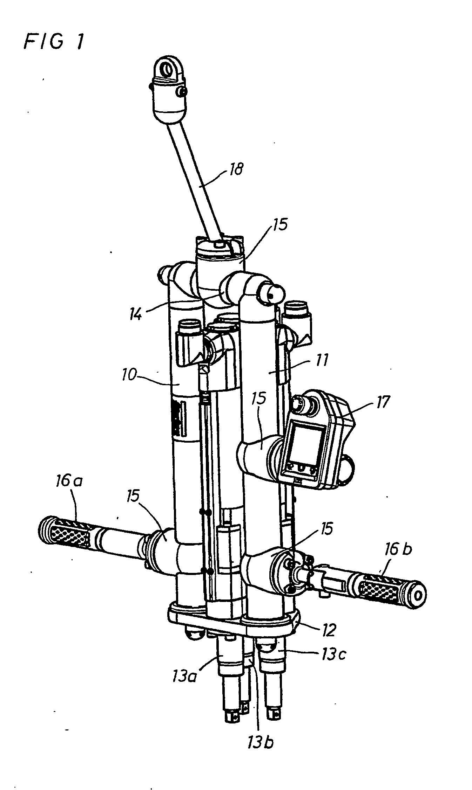

The structure shown in Fig. 1 comprises two parallel tubular members 10,11 connected at their lower ends by a transverse plate 12 for supporting three tool spindles 13a,b,c and at its upper ends by a short tubular member 14 of the same diameter as the members 10,11. On the short tubular member 14 as well as on the two parallel tubular members 10,11 there are secured four identical mounting devices 15 for attachment of additional equipment such as handles 16a,b, a display unit 17, and a support bar 18.

Each one of the mounting devices 15 comprises a substantially U-shaped support member 20 including a part-cylindrical inner surface 21 for enclosing one of the tubular members 10,11,14, and two parallel wall portions 22,23. The latters define between them a rectangular radial passage 24 with the same width as the diameter of the tubular members 10,11,14. In the passage 24 there is guidingly supported a clamping block 25 which is formed at its one end with a part-cylindrical surface 28 adapted for contact with a tubular member, and at its opposite end with a part-spherical surface 29 for contact with a spherical connection portion 30 of an element or additional equipment to be attached to the structure. All elements to be attached to the mounting device have to have a spherical connection portion 30 in combination with a reduced diameter portion or shaft 26.

The mounting device 15 further comprises a ring nut 32 which engages threaded portions 33,34 on the wall portions 22,23 and serves as a radial support for the wall portions 22,23. There is also a clamping ring 35 which is formed on its inner side with a part-spherical surface 36 for engagement with the spherical connection portion 30 of an attached element. The clamping ring 35 is formed with a lateral opening 31 for receiving sidewise the part 26 of an attached element having a smaller diameter than the spherical connection portion 30, and the ring 35 is urged towards the ring nut 32 and the support member 20 by means of four screws 37 a-d which engage threaded bores (not shown) in the ring nut 32. The ring nut 32 not only forms a radial support for the wall portions 22,23 but also a clamping force transferring element between the support member 20 and the clamping ring 35, i.e. the ring nut 32 is sturdy and big enough to comprise the threaded bores for the screws 37 a-d.

When using the mounting device according to the invention the clamping ring 35, the ring nut 32, and the clamping block 25 are first removed from the support member 20, which means that the latter is open to be slid over a tubular member radially, anywhere on the tubular member where there is a free space. Then, the clamping block 25 is introduced into the passage 24 between the wall portions 22,23, the ring nut 32 is treaded onto the threaded portions 33,34 on the wall portions 22,23, the spherical connection portion 30 of an element to be attached is brought into contact with the part-spherical surface 29 of the clamping block 25, the clamping ring 35 is placed outside the ring nut 32 receiving the reduced diameter portion 26 of the element to be attached through the lateral opening 31, and the screws 37 a-d are put in place and tightened. By tightening the screws 37 a-d the clamping ring 35 is pressed against the spherical connection portion 30 of the element to be attached, whereby the latter is urged against the clamping block 25 which in turn is clamped against a tubular member 10,11,14. By this arrangement the mounting device is frictionally locked relative to a tubular element 10,11,14, and at the same time the spherical connection portion 30 of the element to be attached 16-18 is locked relative to the mounting device via frictional engagement between the spherical surface of the clamping block 25 on one side and the clamping ring 35 on the other side. Before tightening the screws 37 a-d the support member 20 may be set in a desired position and direction relative to the tubular member, and the attached element, handle, display etc., may be adjusted to a desired position relative to the support member 20 as well as to the structure as a whole.

The mounting device according to the invention is advantageous in relation to previously described devices for the same purpose in that the support member comprises two parallel wall portions 22,23 which form between them a clamping block 25 guide way which has the same width as the diameter of the tubular members 10,11,14 which makes it possible to mount the device side-wise on a tubular.member anytime and anywhere on a tubular member where a free space is available. This results in an improved flexibility of the entire structure as regards the adaptability to different demands for additional equipment and accessories.

## Claims

1. Mounting device for attaching an element with a spherical connection portion (30) to a tubular member (10,11,14), comprising a support member (20) with a part-cylindrical inner surface (21) of the same diameter as the tubular member and a radial opening for guidingly supporting a clamping block (25), said clamping block (25) is provided at one end with a part-cylindrical contact surface (28) with the same diameter as the tubular member, and at an opposite end with a part-spherical support surface (29) for engagement with the spherical connection portion (30) of an element to be attached, and a clamping ring (35) having on one side a part-spherical surface (36) disposed opposite said part-spherical support surface (29) of said clamping block (25), and two or more screws for pressing the clamping ring (35), the spherical connection portion (30) of the element to be attached, and the clamping block (25) against the tubular member for frictionally locking the element to be attached, the clamping block (25) and the support member (20) relative to the tubular member (10,11,14),
**characterized in that**
• said support member (20) comprises two parallel wall portions (22,23) which form between them a radial opening (24) which is rectangular in shape,
• said opening (24) has a width equal to the diameter of the tubular member (10,11,14),
• a ring nut (32) is secured to the support member (20) by engaging threaded sections (33,34) on said wall portions (22,23), and
• said two or more screws engage threaded bores (37 a-d) in said ring nut (32).

2. Mounting device according to claim 1, **charac terized** in that the clamping ring (35) has a lateral opening (31) for receiving a part (26) of the attached element that has a smaller diameter than the spherical connection portion (30).

## Patentansprüche

1. Befestigungsvorrichtung zum Befestigen eines Elements mit einem kugelförmigen Verbindungsabschnitt (30) an einem röhrenförmigen Glied (10, 11, 14), umfassend ein Halteelement (20) mit einer teilzylindrischen Innenfläche (21) mit demselben Durchmesser wie das röhrenförmige Glied und einer radialen Öffnung zum führenden Halten eines Klemmblocks (25), wobei der Klemmblock (25) an einem Ende mit einer teilzylindrischen Kontaktfläche (28) mit demselben Durchmesser wie das röhrenförmige Glied und an einem entgegengesetzten Ende mit einer teilkugelförmigen Auflagefläche (29) für den Eingriff mit dem kugelförmigen Verbindungsabschnitt (30) eines zu befestigenden Elements versehen ist, und einen Klemmring (35), der auf einer Seite eine teilkugelförmige Fläche (36), die gegenüber der teilkugelförmigen Auflagefläche (29) des Klemmblocks (25) angeordnet ist, und zwei oder mehr Schrauben aufweist, um den Klemmring (35), den kugelförmigen Verbindungsabschnitt (30) des zu befestigenden Elements und den Klemmblock (25) gegen das röhrenförmige Glied zu drücken, um das zu befestigende Element, den Klemmblock (25) und das Halteelement (20) bezogen auf das röhrenförmige Glied (10, 11, 14) reibschlüssig festzustellen,
**dadurch gekennzeichnet, dass**
- das Halteelement (20) zwei parallele Wandabschnitte (22, 23) umfasst, die dazwischen eine radiale Öffnung (24) bilden, die rechteckig geformt ist,
- die Öffnung (24) eine Breite gleich dem Durchmesser des röhrenförmigen Glieds (10, 11, 14) aufweist,
- ein Gewindering (32) an dem Halteelement (20) gesichert ist, indem er mit Gewindeabschnitten (33, 34) an den Wandabschnitten (22, 23) in Eingriff steht, und
- die zwei oder mehr Schrauben mit Gewindebohrungen (37 a-d) in dem Gewindering (32) in Eingriff stehen.

2. Befestigungsvorrichtung nach Anspruch 1, **dadurch gekennzeichnet, dass** der Klemmring (35) eine seitliche Öffnung (31) zum Aufnehmen eines Teils (26) des befestigten Elements mit einem kleineren Durchmesser als der kugelförmige Verbindungsabschnitt (30) aufweist.

## Revendications

1. Dispositif de montage pour fixation d'une pièce avec une portion de raccordement sphérique (30) à un élément tubulaire (10, 11, 14), comprenant un élément de support (20) avec une surface intérieure partiellement cylindrique (21) de diamètre identique à celui de l'élément tubulaire et une ouverture radiale pour supporter en le guidant un bloc de serrage (25), ledit bloc de serrage (25) est muni à une extrémité d'une surface partiellement cylindrique (28) de diamètre identique à celui de l'élément tubulaire, et à une extrémité opposée d'une surface de support partiellement sphérique (29) pour s'engager dans la portion de raccordement sphérique (30) d'une pièce destinée à être fixée, et une bague de serrage (35) présentant sur un côté une surface partiellement sphérique (36) disposée à l'opposé de ladite surface de support partiellement sphérique (29) dudit bloc de serrage (25), et deux vis ou plus pour presser la bague de serrage (35), la portion de raccordement sphérique (30) de la pièce destinée à être fixée, et le bloc de serrage (25) contre l'élément tubulaire pour bloquer par friction la pièce destinée à être fixée, le bloc de serrage (25) et l'élément de support (20) par rapport à l'élément tubulaire (10, 11, 14),
**caractérisé en ce que**
• ledit élément de support (20) comprend deux portions de paroi parallèles (22, 23) qui forment entre elles une ouverture radiale (24) qui est de forme rectangulaire,
• ladite ouverture (24) présente une largeur égale au diamètre de l'élément tubulaire (10, 11, 14),
• une bague filetée (32) est fixée sur l'élément de support (20) en s'engageant dans des sections filetées (33, 34) sur lesdites portions de paroi (22, 23), et
• lesdites deux vis ou plus s'engagent dans des alésages filetés (37 a-d) dans ladite bague filetée (32).

2. Dispositif de montage selon la revendication 1, **caractérisé en ce que** la bague de serrage (35) présente une ouverture latérale (31) pour recevoir une partie (26) de la pièce fixée présentant un diamètre inférieur à la portion de raccordement sphérique (30).
